# EUROPEAN PATENT APPLICATION

(11) **EP 4 223 814 A2**
(43) Date of publication of application: **09.08.2023**
(21) Application number: 23166590.2
(22) Date of filing: 26.02.2014
(51) Int. Cl.: C08G 18/10, C08G 18/28, C08J 9/06, C08K 5/02, C08L 75/04, C08G 18/76

(54) **POLYURETHANE FOAM PREMIXES CONTAINING HALOGENATED OLEFIN BLOWING AGENTS AND FOAMS MADE FROM SAME**

(30) Priority: 26.02.2013 US 201361769494 P; 25.02.2014 US 201414189134
(62) Divisional of application: 14756704.4
(71) Applicant: Honeywell International Inc., Morris Plains, NJ 07950 (US)
(72) Inventor: YU, Bin, Morristown, 07962-2245 (US); BOGDAN, Mary, Morristown, 07962-2245 (US); GITTERE, Clifford, Morristown, 07962-2245 (US); ROSS, Michael, Morristown, 07962-2245 (US); GROSSMAN, Ronald, Morristown, 07962-2245 (US); WILLIAMS, David, Morristown, 07962-2245 (US)
(74) Representative: Stepney, Gregory John

(57) **Abstract**

The invention provides polyurethane and polyisocyanurate foams and methods for the preparation thereof. More particularly, the invention relates to closed-celled, polyurethane and polyisocyanurate foams and methods for their preparation. The foams are characterized by a fine uniform cell structure and little or no foam collapse. The foams are produced with a polyol premix composition which comprises a combination of a hydrohaloolefin blowing agent, a polyol, a silicone surfactant, and a precipitation-resistant metal-based catalyst used alone or in combination with an amine catalyst.

## Description

### CROSS REFERENCE TO RELATED APPLICATIONS

The present application claims priority to U.S. Provisional Application Serial No. 61/769,494, filed February 26, 2013, the contents of which are incorporated herein by reference in its entirety.

### FIELD OF THE INVENTION

The present invention pertains to polyurethane and polyisocyanurate foams, to foamable compositions, to blowing agents and catalyst systems and methods for the preparation thereof.

### BACKGROUND OF THE INVENTION

Certain rigid to semi-rigid polyurethane or polyisocyanurate foams have utility in a wide variety of insulation applications including roofing systems, building panels, building envelope insulation, spray applied foams, one and two component froth foams, insulation for refrigerators and freezers, and so called integral skin for applications such as steering wheels and other automotive or aerospace cabin parts, shoe soles, and amusement park restraints. Important to the large-scale commercial acceptance of rigid polyurethane foams is their ability to provide a good balance of properties. For example, many rigid polyurethane and polyisocyanurate foams are known to provide outstanding thermal insulation, excellent fire resistance properties, and superior structural properties at reasonably low densities. Integral skin foams are generally known to produce a tough durable outer skin and a cellular, cushioning core.

It is known in the art to produce rigid or semi-rigid polyurethane and polyisocyanurate foams by reacting a polyisocyanate with one or more polyols in the presence of one or more blowing agents, one or more catalysts, one or more surfactants and optionally other ingredients. Blowing agents that have here to for been used include certain compounds within the general category of compounds including hydrocarbons, fluorocarbons, chlorocarbons, chlorofluorocarbons, hydrochlorofluorocarbons, halogenated hydrocarbons, ethers, esters, aldehydes, alcohols, ketones, and organic acid or gas, most often CO₂, generating materials. Heat is generated when the polyisocyanate reacts with the polyol. This heat volatilizes the blowing agent contained in the liquid mixture, thereby forming bubbles therein. In the case of gas generating materials, gaseous species are generated by thermal decomposition or reaction with one or more of the ingredients used to produce the polyurethane or polyisocyanurate foam. As the polymerization reaction proceeds, the liquid mixture becomes a cellular solid, entrapping the blowing agent in the foam's cells. If a surfactant is not used in the foaming composition, in many cases the bubbles simply pass through the liquid mixture without forming a foam or forming a foam with large, irregular cells rendering it not useful.

The foam industry has historically used liquid blowing agents that include certain fluorocarbons because of their ease of use and ability to produce foams with superior mechanical and thermal insulation properties. These certain fluorocarbons not only act as blowing agents by virtue of their volatility, but also are encapsulated or entrained in the closed cell structure of the rigid foam and are the major contributor to the low thermal conductivity properties of the rigid urethane foams. These fluorocarbon-based blowing agents also produce a foam having a favorable k-factor. The k-factor is the rate of transfer of heat energy by conduction through one square foot of one-inch thick homogenous material in one hour where there is a difference of one degree Fahrenheit perpendicularly across the two surfaces of the material. Since the utility of closed-cell polyurethane-type foams is based, in part, on their thermal insulation properties, it would be advantageous to identify materials that produce lower k-factor foams.

Preferred blowing agents also have low global warming potential. Among these are certain hydrohaloolefins including certain hydrofluoroolefins of which trans-1,3,3,3-tetrafluoropropene (1234ze(E)) and 1,1,1,4,4,4hexafluorobut-2-ene (1336mzzm(Z)) are of particular interest and hydrochlorofluoroolefins of which 1-chloro-3,3,3-trifluoropropene (1233zd) (including both cis and trans isomers and combinations thereof) is of particular interest. Processes for the manufacture of trans-1,3,3,3-tetrafluoropropene are disclosed in U.S. patents 7,230,146 and 7,189,884. Processes for the manufacture of trans-1-chloro-3,3,3-trifluoropropene are disclosed in U.S. patents 6,844,475 and 6,403,847.

It is convenient in many applications to provide the components for polyurethane or polyisocyanurate foams in pre-blended formulations. Most typically, the foam formulation is pre-blended into two components. The polyisocyanate and optionally isocyanate compatible raw materials, including but not limited to certain blowing agents and non-reactive surfactants, comprise the first component, commonly referred to as the "A" component. A polyol or mixture of polyols, one or more surfactant, one or more catalyst, one or more blowing agent, and other optional components including but not limited to flame retardants, colorants, compatibilizers, and solubilizers typically comprise the second component, commonly referred to as the "B" component. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, and other polyols can be added to the mixing head or reaction site. Most conveniently, however, they are all incorporated into one B component.

Applicants have come to appreciate that a shortcoming of two-component systems, especially those using certain hydrohaloolefins, including 1234ze(E), 1336(Z), and 1233zd(E), is the shelf-life of the B-side composition. Normally when a foam is produced by bringing together the A and B side components, a good foam is obtained. However, applicants have found that if the polyol premix composition containing certain halogenated olefin blowing agents, including in particular 1234ze(E), and a typical amine-containing catalyst is aged, prior to treatment with the polyisocyanate, deleterious effects can occur. For example, applicants have found that such formulations can produce a foamable composition which has an undesirable increase in reactivity time and/or a subsequent cell coalescence. The resulting foams are of lower quality and/or may even collapse during the formation of the foam.

Applicants have discovered that a dramatic improvement in foam formation and/or performance can be achieved by decreasing the amount of certain amine-based catalyst in the system, to the point in certain embodiments of substantially eliminating the amine-based catalyst, and using instead certain metal-based catalysts or blends of metal catalyst(s) and amine catalyst(s). While the use of such metal-based catalyst has been found to be especially advantageous in many formulations and applications, applicants have come to appreciate that a difficulty/disadvantage may be present in certain foam premix formulations. More specifically, applicants have found that foam premix formulations having relatively high concentrations of water, as defined hereinafter, tend to not achieve acceptable results in storage stability, in the final foam and/or in the foam processing when certain metal catalysts are utilized. Applicants have found that this unexpected problem can be overcome by careful selection of the metal-based catalyst(s), including complexes and/or blends of metal catalyst(s) and amine catalyst(s) to produce highly advantageous and unexpected results, as described further hereinafter.

### SUMMARY

Applicants have found that in certain embodiments a substantial advantage can be achieved in foams, foamable compositions, foam premixes, and associated methods and systems, by the selection of a catalyst system which includes a precipitant resistant metal-based catalyst, preferably, at least one of a precipitant resistant cobalt-based metal catalyst, a precipitant resistant zinc-based metal catalyst, a precipitant resistant tin-based metal catalyst, a precipitant resistant zirconate-based metal catalyst (including a precipitant resistant organic-zirconate-based metal catalyst), a precipitant resistant manganese-based metal catalyst, a precipitant resistant titanium-based metal catalyst and combinations thereof.

Thus, according to one aspect of the invention, applicants have found that foamable compositions, pre-mixes and foams that contain or brought into association with hydrohaloolefin blowing agents, including particularly C3 and C4 hydrohaloolefin blowing agents, which utilize metal catalysts in accordance with the present invention, either alone or in combination with an amine catalyst, can extend the shelf life of such compositions and polyol premixes s and/or can improve the quality of the foams produced therefrom. This advantage is believed to be present with hydrohaloolefins generally, more preferably, but not limited to, 1234ze(E), and/or 1233zd(E), and/or 1336mzzm(Z), and even more preferably with 1233zd(E). Applicants have found that good quality foams can be produced according to the present invention even if the polyol blend has been aged several weeks or months.

To this end, and in certain preferred aspects, the present invention relates to foamable compositions and foam premixes including a hydrohaloolefin blowing agent, one or more polyols, optionally but preferably one or more surfactants, and a catalyst system comprising a metal catalyst selected from the group consisting of a precipitant resistant cobalt-based metal catalyst, a precipitant resistant zinc-based metal catalyst, a precipitant resistant tin-based metal catalyst, a precipitant resistant zirconate-based metal catalyst (including a precipitant resistant organic-zirconate-based metal catalyst), a precipitant resistant manganese-based metal catalyst, a precipitant resistant titanium-based metal catalyst and combinations thereof.

According to further aspects, this invention relates to rigid to semi-rigid, polyurethane and polyisocyanurate foams and methods for their preparation, which foams are characterized by a fine uniform cell structure and little or no foam collapse. The foams are preferably produced with an organic polyisocyanate and a polyol premix composition which comprises a combination of a blowing agent, which is preferably a hydrohaloolefin, a polyol, a surfactant, and a catalyst system which one or more non-amine catalysts are included, preferably a precipitation-resistant metal-based catalyst selected from the group consisting of a precipitant resistant cobalt-based metal catalyst, a precipitant resistant zinc-based metal catalyst, a precipitant resistant tin-based metal catalyst, a precipitant resistant zirconate-based metal catalyst (including a precipitant resistant organic-zirconate-based metal catalyst), a precipitant resistant manganese-based metal catalyst, a precipitant resistant titanium-based metal catalyst and combinations thereof. Such catalyst systems may also include one or more amine catalysts, which may be provided in a minor proportion based on all the catalysts in the system.

Additional aspects, embodiments, and advantages of the invention will be readily apparent to one of skill in the art on the basis of the disclosure provided herein.

### BRIEF DESCRIPTION OF THE FIGURES

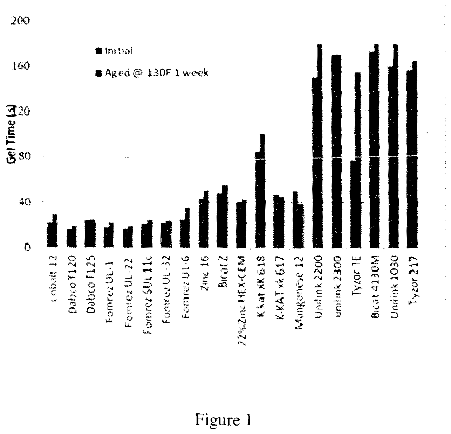

Figure 1 illustrates the results of a reactivity study on selected metal catalysts.

### DETAILED DESCRIPTION

The present invention, in certain aspects, provides a high-water content polyol premix composition which comprises a combination of a blowing agent, one or more polyols, one or more surfactants, and a catalyst system including a precipitation-resistant metal catalyst, more preferably at least one of a precipitation-resistant metal based catalyst selected from a tin-based catalyst; an organic zirconate-based catalyst; a cobalt-based catalyst; a zinc-based catalyst; a manganese-based catalyst; or a titanium-based catalyst, including combinations thereof.

Applicants have discovered that, in certain foams or foam systems having high water content and a metal catalyst, substantial deterioration in performance may be observed. While not intending to be bound by theory, Applicants have found that such deterioration, at least in part, is to the hydrolization and precipitation of certain metal catalysts in the presence of water. Applicants have further found that the precipitation resistant metal catalysts provided herein surprisingly and unexpectedly overcome such deterioration, providing for a more storage-stable foam premix.

To this end, the invention provides polyol premix composition which comprises a combination of a blowing agent, one or more polyols, one or more silicone surfactants, and a catalyst system. The blowing agent comprises one or more hydrohaloolefins, and optionally a hydrocarbon, fluorocarbon, chlorocarbon, hydrochlorofluorocarbon, hydrofluorocarbon, halogenated hydrocarbon, ether, ester, alcohol, aldehyde, ketone, organic acid, gas generating material, water or combinations thereof. The catalyst system includes a precipitation-resistant metal-based catalyst. This metal-based catalyst can be used either alone or in combination with amine catalysts. The invention also provides a method of preparing a polyurethane or polyisocyanurate foam comprising reacting an organic polyisocyanate with the polyol premix composition.

### THE HYDROHALOOLEFIN BLOWING AGENT

The blowing agent component comprises a hydrohaloolefin, preferably comprising at least one or a combination of 1234ze(E), 1233zd(E), and isomer blends thereof, and/or 1336mzzm(Z), and optionally a hydrocarbon, fluorocarbon, chlorocarbon, fluorochlorocarbon, halogenated hydrocarbon, ether, fluorinated ether, ester, alcohol, aldehyde, ketone, organic acid, gas generating material, water or combinations thereof.

The hydrohaloolefin preferably comprises at least one halooalkene such as a fluoroalkene or chlorofluoroalkene containing from 3 to 4 carbon atoms and at least one carbon-carbon double bond. Preferred hydrohaloolefins non-exclusively include trifluoropropenes, tetrafluoropropenes such as (1234), pentafluoropropenes such as (1225), chlorotrifloropropenes such as (1233), chlorodifluoropropenes, chlorotrifluoropropenes, chlorotetrafluoropropenes, hexafluorobutenes (1336) and combinations of these. More preferred for the compounds of the present invention are the tetrafluoropropene, pentafluoropropene, and chlorotrifloropropene compounds in which the unsaturated terminal carbon has not more than one F or Cl substituent. Included are 1,3,3,3-tetrafluoropropene (1234ze); 1,1,3,3-tetrafluoropropene; 1,2,3,3,3-pentafluoropropene (1225ye), 1,1,1-trifluoropropene; 1,2,3,3,3-pentafluoropropene, 1,1,1,3,3-pentafluoropropene (1225zc) and 1,1,2,3,3-pentafluoropropene (1225yc); (Z)-1,1,1,2,3-pentafluoropropene (1225yez); 1-chloro-3,3,3-trifluoropropene (1233zd), 1,1,1,4,4,4-hexafluorobut-2-ene (1336mzzm) or combinations thereof, and any and all stereoisomers of each of these.

Preferred hydrohaloolefins have a Global Warming Potential (GWP) of not greater than 150, more preferably not greater than 100 and even more preferably not greater than 75. As used herein, "GWP" is measured relative to that of carbon dioxide and over a 100-year time horizon, as defined in "The Scientific Assessment of Ozone Depletion, 2002, a report of the World Meteorological Association's Global Ozone Research and Monitoring Project," which is incorporated herein by reference. Preferred hydrohaloolefins also preferably have an Ozone Depletion Potential (ODP) of not greater than 0.05, more preferably not greater than 0.02 and even more preferably about zero. As used herein, "ODP" is as defined in "The Scientific Assessment of Ozone Depletion, 2002, A report of the World Meteorological Association's Global Ozone Research and Monitoring Project," which is incorporated herein by reference.

### CO-BLOWING AGENTS

Preferred optional co-blowing agents non-exclusively include water, organic acids that produce CO₂ and/or CO, hydrocarbons; ethers, halogenated ethers; esters, alcohols, aldehydes, ketones, pentafluorobutane; pentafluoropropane; hexafluoropropane; heptafluoropropane; trans-1,2 dichloroethylene; methylal, methyl formate; 1-chloro-1,2,2,2-tetrafluoroethane (124); 1,1-dichloro-1-fluoroethane (141b); 1,1,1,2-tetrafluoroethane (134a); 1,1,2,2-tetrafluoroethane (134); 1-chloro 1,1-difluoroethane (142b); 1,1,1,3,3-pentafluorobutane (365mfc); 1,1,1,2,3,3,3-heptafluoropropane (227ea); trichlorofluoromethane (11); dichlorodifluoromethane (12); dichlorofluoromethane (22); 1,1,1,3,3,3-hexafluoropropane (236fa); 1,1,1,2,3,3-hexafluoropropane (236ea); 1,1,1,2,3,3,3-heptafluoropropane (227ea), difluoromethane (32); 1,1-difluoroethane (152a); 1,1,1,3,3-pentafluoropropane (245fa); butane; isobutane; normal pentane; isopentane; cyclopentane, or combinations thereof. In certain embodiments the co-blowing agent(s) include one or a combination of water and/or normal pentane, isopentane or cyclopentane, which may be provided with one or a combination of the hydrohaloolefin blowing agents discussed herein.. The blowing agent component is preferably present in the polyol premix composition in an amount of from about 1 wt.% to about 30 wt.%, preferably from about 3 wt.% to about 25 wt.%, and more preferably from about 5 wt.% to about 25 wt.%, by weight of the polyol premix composition. When both a hydrohaloolefin and an optional blowing agent are present, the hydrohaloolefin component is preferably present in the blowing agent component in an amount of from about 5 wt.% to about 90 wt.%, preferably from about 7 wt.% to about 80 wt.%, and more preferably from about 10 wt.% to about 70 wt.%, by weight of the blowing agent components; and the optional blowing agent is preferably present in the blowing agent component in an amount of from about 95 wt.% to about 10 wt.%, preferably from about 93 wt.% to about 20 wt.%, and more preferably from about 90 wt.% to about 30 wt.%, by weight of the blowing agent components.

### POLYOL COMPONENT

The polyol component, which includes mixtures of polyols, can be any polyol or polyol mixture which reacts in a known fashion with an isocyanate in preparing a polyurethane or polyisocyanurate foam. Useful polyols comprise one or more of a sucrose containing polyol; Mannich polyol; a glucose containing polyol; a sorbitol containing polyol; a methylglucoside containing polyol; an aromatic polyester polyol; glycerol; ethylene glycol; diethylene glycol; propylene glycol; graft copolymers of polyether polyols with a vinyl polymer; a copolymer of a polyether polyol with a polyurea; one or more of (a) condensed with one or more of (b), wherein (a) is selected from glycerine, ethylene glycol, diethylene glycol, trimethylolpropane, ethylene diamine, pentaerythritol, soy oil, lecithin, tall oil, palm oil, and castor oil; and (b) is selected from ethylene oxide, propylene oxide, a mixture of ethylene oxide and propylene oxide; and combinations thereof. The polyol component is usually present in the polyol premix composition in an amount of from about 60 wt.% to about 95 wt.%, preferably from about 65 wt.% to about 95 wt.%, and more preferably from about 65 wt.% to about 80 wt.%, by weight of the polyol premix composition.

### SURFACTANT

The polyol premix composition preferably also contains a silicone surfactant. The silicone surfactant is preferably used to emulsify the polyol preblend mixture, as well as to control the size of the bubbles of the foam so that a foam of a desired cell structure is obtained. Preferably, a foam with small bubbles or cells therein of uniform size is desired since it has the most desirable physical properties such as compressive strength and thermal conductivity. Also, it is critical to have a foam with stable cells which do not collapse prior to forming or during foam rise.

Silicone surfactants for use in the preparation of polyurethane or polyisocyanurate foams are available under a number of trade names known to those skilled in this art. Such materials have been found to be applicable over a wide range of formulations allowing uniform cell formation and maximum gas entrapment to achieve very low density foam structures. The preferred silicone surfactant comprises a polysiloxane polyoxyalkylene block co-polymer. Some representative silicone surfactants useful for this invention are Momentive's L-5130, L-5180, L-5340, L-5440, L-6100, L-6900, L-6980 and L-6988; Air Products DC-193, DC-197, DC-5582, DC-5357 and DC-5598; and B-8404, B-8407, B-8409 and B-8462 from Evonik Industries AG of Essen, Germany. Others are disclosed in U.S. patents 2,834,748; 2,917,480; 2,846,458 and 4,147,847. The silicone surfactant component is usually present in the polyol premix composition in an amount of from about 0.5 wt.% to about 5.0 wt.%, preferably from about 0.5 wt.% to about 4.0 wt.%, more preferably from about 0.5 wt.% to about 3.0 wt.%, and even more preferably from about 0.5 wt.% to about 1.5 wt.%, by weight of the polyol premix composition.

The polyol premix composition may optionally, but in certain embodiments preferably, contain a non-silicone surfactant, such as a non-silicone, non-ionic surfactant. Such may include oxyethylated alkylphenols, oxyethylated fatty alcohols, paraffin oils, castor oil esters, ricinoleic acid esters, turkey red oil, groundnut oil, paraffins, and fatty alcohols. The preferred non-silicone non-ionic surfactants are Dabco LK-221 or LK-443 which is commercially available from Air Products Corporation, and VORASURF^{™} 504 from DOW. When a non-silicone, non-ionic surfactant used, it is usually present in the polyol premix composition in an amount of from about 0.25 wt.% to about 3.0 wt.%, preferably from about 0.5 wt.% to about 2.5 wt.%, more preferably from about 0.75 wt.% to about 2.5 wt. %, and even more preferably from about 0.75 wt.% to about 2.0 wt. %, by weight of the polyol premix composition.

### THE CATALYST SYSTEM

In certain aspects, the catalyst system includes a non-amine catalyst and, optionally, though in certain embodiments preferably, an amine catalyst. The amine catalyst may include any one or more compounds containing an amino group and exhibiting the catalytic activity provided herein. Such compounds may be linear or branched or cyclic non-aromatic or aromatic in nature. Useful, non-limiting, amines include primary amines, secondary amines or tertiary amines. Useful tertiary amine catalysts non-exclusively include N,N,N',N",N"-pentamethyldiethyltriamine, N,N-ethyldiisopropylamine; N-methyldicyclohexylamine (Polycat 12); N,N-dimethylcyclohexylamine (Polycat 8); benzyldimethylamine (BDMA); N,N-dimethylisopropylamine; N-methyl-N-isopropylbenzylamine; N-methyl-N-cyclopentylbenzylamine; N-isopropyl-N-sec-butyl-trifluoroethylamine; N,N-diethyl-(α-phenylethyl)amine, N,N,N-tri-n-propylamine, N,N,N',N',N",N"-pentamethyldiethylenetriamine, N,N,N',N',N",N"-pentaethyldiethylenetriamine,N,N,N',N',N",N"-pentamethyldipropylenetriamine, tris-2,4,6-(dimethylaminomethyl)-phenol (DABCO^{®} TMR-30), or combinations thereof. Useful secondary amine catalysts non-exclusively include dicyclohexylamine; t-butylisopropylamine ; di-t-butylamine; cyclohexyl-t-butylamine; di-sec-butylamine, dicyclopentylamine; di-(α-trifluoromethylethyl)amine; di-(α-phenylethyl)amine; or combinations thereof. Useful primary amine catalysts non-exclusively include: triphenylmethylamine and 1,1-diethyl-n-propylamine.

Other useful amines includes morpholines, imidazoles, ether containing compounds, and the like. These include: dimorpholinodiethylether, N-ethylmorpholine, N-methylmorpholine, bis(dimethylaminoethyl) ether, imidizole, 1,2 dimethylimidazole (Toyocat DM70 and DABCO^{®} 2040), n-methylimidazole, dimorpholinodimethylether, 2,2-dimorpholinodiethylether (DMDEE), bis(diethylaminoethyl) ether, bis(dimethylaminopropyl) ether.

In embodiments where an amine catalyst is provided, the catalyst may be provided in any amount to achieve the function of the instant invention without affecting the foam forming or storage stability of the composition, as characterized herein. To this end, the amine catalyst may be provided in amounts less than or greater than the non-amine catalyst.

In addition to (or in certain embodiments in place of) an amine catalyst, the catalyst system of the present invention also includes at least one non-amine catalyst. In certain embodiments, the non-amine catalysts are inorgano- or organo-metallic compounds. Useful inorgano- or organo-metallic compounds include, but are not limited to, organic salts, Lewis acid halides, or the like, of any metal, including, but not limited to, transition metals, post-transition metals, rare earth metals (e.g. lanthanides), metalloids, alkali metals, alkaline earth metals, or the like. According to certain broad aspects of the present invention, the metals may include, but are not limited to, bismuth, lead, tin, zinc, chromium, cobalt, copper, iron, manganese, magnesium, potassium, sodium, titanium, mercury, antimony, uranium, cadmium, thorium, aluminum, nickel, cerium, molybdenum, vanadium, zirconium, or combinations thereof. Non-exclusive examples of such inorgano- or organo-metallic catalysts include, but are not limited to, bismuth 2-ethylhexanote, bismuth nitrate, lead 2-ethylhexanoate, lead benzoate, lead naphthanate, ferric chloride, antimony trichloride, antimony glycolate, tin salts of carboxylic acids, dialkyl tin salts of carboxylic acids, potassium acetate, potassium octoate, potassium 2-ethylhexoate, potassium salts of carboxylic acids, zinc salts of carboxylic acids, zinc 2-ethylhexanoate, glycine salts, alkali metal carboxylic acid salts, sodium N-(2-hydroxy-5-nonylphenol)methyl-N-methylglycinate, tin (II) 2-ethylhexanoate, dibutyltin dilaurate, or any of the other metal catalysts discussed herein, including combinations thereof. In certain preferred embodiments the catalysts are present in the polyol premix composition in an amount of from about 0.001 wt.% to about 5.0 wt.%, 0.01 wt.% to about 4.0 wt.%, preferably from about 0.1 wt.% to about 3.5 wt.%, and more preferably from about 0.2 wt.% to about 3.5 wt. %, by weight of the polyol premix composition. While these are usual amounts, the quantity amount of the foregoing catalyst can vary widely, and the appropriate amount can be easily be determined by those skilled in the art.

In another embodiment of the invention, the non-amine catalyst is a quaternary ammonium carboxylate. Useful quaternary ammonium carboxylates include, but are not limited to: potassium octolate (Dabco K15) sodium acetate (Polycat 46), (2-hydroxypropyl)trimethylammonium 2-ethylhexanoate (TMR^{®} sold by Air Products and Chemicals); (2-hydroxypropyl)trimethylammonium formate (TMR-2^{®} sold by Air Products and Chemicals); and Toyocat TRX sold by Tosoh, Corp. These quaternary ammonium carboxylate catalysts are usually present in the polyol premix composition in an amount of from about 0.25 wt.% to about 3.0 wt.%, preferably from about 0.3 wt.% to about 2.5 wt.%, and more preferably from about 0.35 wt.% to about 2.0 wt. %, by weight of the polyol premix composition. While these are usual amounts, the quantity amount of catalyst can vary widely, and the appropriate amount can be easily be determined by those skilled in the art.

In general, applicants have found that metal catalysts are nonreactive with halogenated olefins that are adaptable for use as blowing agents and therefore appear to produce a relatively stable system, and that with a judicious selection of a metal catalyst surprisingly effective and stable compositions, systems and methods can be obtained.

In certain aspects of the present invention, advantageous selection of metal catalysts for use in connection with high-water content foamable systems and/or foam premix compositions is preferred. As the term is used herein, the term "high-water content" refers to systems and compositions containing greater than about 0.5 parts of water (based on weight) per hundred parts of polyol (hereinafter sometimes referred to as "pphp" or "php") in the system/composition. In preferred embodiments, the high-water content systems contain water in an amount of at least about 0.75, and more preferably at least about 1.0, and even more preferably at least about 1.5 pphp. As will be understood by those skilled in the art, certain formulations are known to have advantages when relatively high levels of water are used and/or are present in the system, particularly in the foam premix component containing the polyol component. More particularly, applicants have found that in systems which have a blowing agent comprising or consisting essentially C3 and/or C4 hydrohaloolefins, including HFO-1233zd, several of such metal-based catalysts exhibit a substantial deterioration in performance when used in high water content systems. While not intending to be bound by theory, Applicants have found that such deterioration, at least in part, is to the hydrolyzation and precipitation of certain metal-based catalysts in the presence of water. Such reactivity decreases catalyst availability, thus decreasing foam productivity.

Applicants have further discovered a substantial advantage can be achieved in foam properties and/or foaming performance by the use of precipitation-resistant metal-based catalyst(s), including, but not limited to, precipitation-resistant cobalt-based metal catalysts, precipitation-resistant zinc-based metal catalysts, precipitation-resistant tin-based metal catalysts, precipitation-resistant zirconate-based metal catalysts (including precipitant resistant organic-zirconate-based metal catalysts), precipitation-resistant manganese-based metal catalysts, precipitation-resistant titanium-based metal catalysts and combinations thereof. In certain preferred, but non-limiting embodiments, the precipitation-resistant tin-based metal catalysts include one or more tin-mercaptide-based catalysts, one or more tin-maleate-based catalysts, one or more tin-oxide-based catalysts, and/or one or more organic zirconate-based metal catalysts.

As the term is used herein, "precipitation-resistant" refers to a substantial absence of precipitation by visual observation as a result of the polyol composition, and preferably the polyol premix composition, under at least one, and preferably both, the High Temperature conditions and Low Temperature conditions. That is, in certain aspects of the present invention, a precipitation resistant material satisfies the High Temperature conditions if, after being maintained in a pressure reaction vessel at about 54°C for 7 days, or in certain embodiments 10 days, or 14 days, it does not produce any readily visual precipitate. A precipitation resistant material satisfies the Low Temperature conditions if, after being maintained at about room temperature for a period of at least one month, more preferably about two months and even more preferably a period of about three months or up to six months, it does not produce any readily visual precipitate.

Applicants have found that exceptional but unexpected results can be achieved when one or more of the precipitation-resistant metal catalyst provided herein (or a combination thereof) are used, particularly in high-water content systems/pre-mix compositions, and even more particularly in high-water content systems/pre-mix compositions having at least about 1 pphp water.

As used herein, the term "cobalt-based catalyst" or "cobalt-based metal catalyst" refers to salts, complexes or compositions of the metal cobalt with any organic group. In certain aspects, it may be represented by the formula Co - (R)₂, wherein each R may be independently selected from the group consisting of a hydrogen, a halide, a hydroxide, a sulfate, a carbonate, a cyanate, a thiocyanate, an isocyanate, a isothiocyanate, a carboxylate, an oxalate, or a nitrate. In further embodiments, each R may independently include a substituted or unsubstituted alkyl, heteroalkyl, aryl, or heteroaryl group, including, but not limited to, substituted or unsubstituted alkanes, substituted or unsubstituted alkenes, substituted or unsubstituted alkynes, ketones, aldehydes, esters, ethers, alcohols, alcoholates, phenolates, glycolates, thiolates, carbonates, carboxylates, octoates, hexanoates, amides, amines, imides, imines, sulfides, sulfoxides, phosphates, or combinations thereof, where in certain embodiments, where applicable, such moieties may contain between 1-20 carbon atoms, or between 1-10 carbon atoms, and may be optionally substituted at one or more positions. In certain preferred embodiments, Co - (R)₂ may form one or a derivative of a cobalt octoate, cobalt hexanoate, cobalt ethylhexanoate, cobalt acetylacetonate, cobalt ethoxide, cobalt propoxide, cobalt butoxide, cobalt isopropoxide, or cobalt butoxide. Further non-limiting examples of organic cobalt-based catalysts of the present invention include, but are not limited to, those identified by the tradename TROYMAX^{™} Cobalt 12, Cobalt10, Cobalt 8, and Cobalt 6 by Troy Chemical, Corp or Cobalt Hex Cem by O.M. Group, Inc.

As used herein, the term "zinc-based catalyst" or "zinc-based metal catalyst" refers to salts, complexes or compositions of the metal zinc with any organic group. In certain aspects, it may be represented by the formula Zn - (R)₂, wherein each R may be independently selected from the group consisting of a hydrogen, a halide, a hydroxide, a sulfate, a carbonate, a cyanate, a thiocyanate, an isocyanate, a isothiocyanate, a carboxylate, an oxalate, or a nitrate. In further embodiments, each R may independently include a substituted or unsubstituted alkyl, heteroalkyl, aryl, or heteroaryl group, including, but not limited, to substituted or unsubstituted alkanes, substituted or unsubstituted alkenes, substituted or unsubstituted alkynes, ketones, aldehydes, esters, ethers, alcohols, alcoholates, phenolates, glycolates, thiolates, carbonates, carboxylates, octoates, hexanoates, amides, amines, imides, imines, sulfides, sulfoxides, phosphates, or combinations thereof, where in certain embodiments, where applicable, such moieties may contain between 1-20 carbon atoms, or between 1-10 carbon atoms, and may be optionally substituted at one or more positions. In certain preferred embodiments, Zn - (R)₂ may form one or a derivative of a zinc carboxylate, zinc octoate, zinc hexanoate, zinc ethylhexanoate, a zinc acetylacetonate, zinc ethoxide, zinc propoxide, zinc butoxide, or zinc isopropoxide. Further non-limiting examples of organic zinc-based catalysts of the present invention include, but are not limited to, those identified by the tradenames TROYMAX^{™} Zinc 16, Zinc 12, Zinc 10, and Zinc 8 from Troy Chemical, Corp., Bicat Z from Shepherd Chemical, Co. and Zinc Hex Cem by O.M. Group, Inc. The zinc-based catalysts may also include blends with one or more other metal based catalysts, such as those provided in K-Kat XK 617 and K-Kat XK 618 from King Industries.

As used herein, the term "manganese-based catalyst" or "manganese-based metal catalyst" refers to salts, complexes or compositions of the metal manganese with any organic group. In certain aspects, it may be represented by the formula Mn - (R)ₓ, wherein x is 1, 2, 3, or 4 and each R may be independently selected from the group consisting of a hydrogen, a halide, a hydroxide, a sulfate, a carbonate, a cyanate, a thiocyanate, an isocyanate, a isothiocyanate, a carboxylate, an oxalate, or a nitrate. In further embodiments, each R may independently include a substituted or unsubstituted alkyl, heteroalkyl, aryl, or heteroaryl group, including, but not limited to, substituted or unsubstituted alkanes, substituted or unsubstituted alkenes, substituted or unsubstituted alkynes, ketones, aldehydes, esters, ethers, alcohols, alcoholates, phenolates, glycolates, thiolates, carbonates, carboxylates, octoates, hexanoates, ethylhexanoates, amides, amines, imides, imines, sulfides, sulfoxides, phosphates, or combinations thereof, where in certain embodiments, where applicable, such moieties may contain between 1-20 carbon atoms, or between 1-10 carbon atoms, and may be optionally substituted at one or more positions. In certain preferred embodiments, Mn - (R)ₓ may form one or a derivative of a manganese carboxylate, a manganese octoate, manganese hexanoate, manganese 2-ethylhexanoate, a manganese acetylacetonate, manganese ethoxide, manganese propoxide, manganese butoxide, manganese isopropoxide, or manganese butoxide. Further non-limiting examples of organic manganese-based catalysts of the present invention include, but are not limited to, those identified by the tradename TROYMAX^{™} Manganese 12, 10, 10PC, 9, and 6 from Troy Chemical, Corp or Manganese Hex Cem by O.M. Group, Inc.

As used herein the term "titanium-based catalyst" or "titanium-based metal catalyst" refers to salts, complexes or compositions of the metal titanium with any organic group. In certain aspects, it may be represented by the formula Ti - (R)ₓ, wherein x is 2, 3, or 4 and each R may be independently selected from the group consisting of a hydrogen, a halide, a hydroxide, a sulfate, a carbonate, a cyanate, a thiocyanate, an isocyanate, a isothiocyanate, a carboxylate, an oxalate, or a nitrate. In further embodiments, each R may independently include a substituted or unsubstituted alkyl, heteroalkyl, aryl, or heteroaryl group, including, but not limited to, substituted or unsubstituted alkanes, substituted or unsubstituted alkenes, substituted or unsubstituted alkynes, ketones, aldehydes, esters, ethers, alcohols, alcoholates, phenolates, glycolates, thiolates, carbonates, carboxylates, octoates, hexanoates, amides, amines, imides, imines, sulfides, sulfoxides, phosphates, or combinations thereof, where in certain embodiments, where applicable, such moieties may contain between 1-20 carbon atoms, or between 1-10 carbon atoms, and may be optionally substituted at one or more positions. In certain preferred embodiments the titanium-based catalyst comprises a titanium oxide based catalyst, such as that of the formula Ti - (OR)ₓ. Each R independently may be any embodiment, as defined above, but in certain embodiments comprises a substituted or unsubstituted alkyl, heteroalkyl, aryl, or heteroaryl group, including, by not limited to substituted or unsubstituted alkanes, substituted or unsubstituted alkenes, substituted or unsubstituted alkynes. Such moieties may contain between 1-20 carbon atoms, in certain aspects between 1-10 carbon atoms, and in further aspects between 1-6 carbon atoms, and may be optionally substituted at one or more positions. In certain preferred embodiments the organic titanium catalysts include titanium tetraalkoxides (such as, but not limited to, Ti(OCH₃)₄, TI(OC₂H₅)₄, Ti(OC₃H₇)₄, Ti(OC₄H₉)₄, Ti(OC₆H₁₃)₄). Further non-limiting examples of organic titanium-based catalysts of the present invention include, but are not limited to, those identified by the tradenames Unilink 2200, Unilink 2300, and Tyzor TE from Dorf Ketal.

As used herein the term "tin-based catalyst" or "tin-based metal catalyst" refers to salts, complexes or compositions of the metal tin with any organic group. In certain aspects, it may be represented by the formula Sn - (R)₄, wherein each R may be independently selected from the group consisting of a hydrogen, a halide, a hydroxide, a sulfate, a carbonate, a cyanate, a thiocyanate, an isocyanate, a isothiocyanate, a carboxylate, an oxalate, or a nitrate. In further embodiments, each R may independently include a substituted or unsubstituted alkyl, heteroalkyl, aryl, or heteroaryl group, including, but not limited to, substituted or unsubstituted alkanes, substituted or unsubstituted alkenes, substituted or unsubstituted alkynes, ketones, aldehydes, esters, ethers, alcohols, alcoholates, phenolates, glycolates, thiolates, carbonates, carboxylates, octoates, hexanoates, amides, amines, imides, imines, sulfides, sulfoxides, phosphates, or combinations thereof, where in certain embodiments, where applicable, such moieties may contain between 1-20 carbon atoms , or between 1-10 carbon atoms, and may be optionally substituted at one or more positions. In certain preferred aspects, the tin-based catalyst is a tin-mercaptide-based catalyst, a tin-maleate-based catalyst, a tin-oxide-based catalyst, or combinations thereof.

As used herein, the term "tin-mercaptide-based catalysts" refers to salts, complexes or compositions of the metal tin with at least one substituted or unsubstituted mercaptide moiety. In certain aspects, it refers to a tin salt of at least one compound of the formula R₄-Sn, were R independently comprises a substituted or unsubstituted, alkyl, heteroalkyl, aryl, or heteroaryl group, wherein the alkyl or heteroalkyl group may be saturated or unsaturated. In certain non-limiting embodiments, the alkyl or heteroalkyl group may have between 1 and 10 carbon atoms and the aryl group may have between 5 and 24 carbon atoms. In further non-limiting embodiments, the tin-mercaptide-based catalyst includes a tin salt of two or more mercaptide moieties. In even further non-limiting embodiments, the valence of the tin metal may be satisfied with mercaptide moieties or a mixture of mercaptide moieties and non- mercaptide moieties, such as, but not limited to, substituted or unsubstituted alkyl, heteroalkyl, aryl, heteroaryl, or heteroatom residues. To this end, the formula for the tin-mercaptide-based catalysts may be provided as (R-S)ₙ- Sn - Rₘ, wherein n = 1, 2, 3, or 4; m = 0, 1, 2, or 3 and n + m = 4. Each R (if present) independently comprises a substituted or unsubstituted, alkyl, heteroalkyl, aryl, or heteroaryl group, wherein the alkyl or heteroalkyl group may be saturated or unsaturated. In certain non-limiting embodiments of R, the alkyl or heteroalkyl group may have between 1 and 10 carbon atoms and the aryl group may have between 5 and 24 carbon atoms. In certain aspects of the invention each R group comprises a straight or branched chain, unsubstituted alkyl group having between 1 and 10 carbon atoms. Non-limiting examples of tin-mercaptide-based catalysts of the present invention include, but are not limited to, dibutyltin dilaurylmercaptide, dimethyltin dilaurylmercaptide, diethyltin dilaurylmercaptide, dipropyltin dilaurylmercaptide, dihexyltin dilaurylmercaptide, and dioctyltin dilaurylmercaptide.

As used herein, the term "tin-maleate-based catalysts" refers to salts, complexes or compositions of the metal tin with at least one maleic acid moiety. In certain aspects, it refers to a tin salt of at least one compound of the formula O₂CCHCHCO₂R, where R comprises a hydrogen, or a substituted or unsubstituted, alkyl, heteroalkyl, aryl, or heteroaryl group, wherein the alkyl or heteroalkyl group may be saturated or unsaturated. In certain non-limiting embodiments, the alkyl or heteroalkyl group may have between 1 and 10 carbon atoms and the aryl group may have between 5 and 24 carbon atoms. In further non-limiting embodiments, the tin-maleate-based catalyst includes a tin salt of two or more maleate moieties. In even further non-limiting embodiments, the valence of the tin metal may be satisfied with maleate moieties or a mixture of maleate moieties and non-maleate moieties, such as, but not limited to, substituted or unsubstituted alkyl, heteroalkyl, aryl, heteroaryl, or heteroatom residues. To this end, the formula for the tin-maleate-based catalysts may be provided as (RO₂CCHCHCO₂)ₙ- Sn - R'ₘ, wherein n = 1, 2, 3, or 4; m = 0, 1, 2, or 3 and n + m = 4. Each R' (if present) independently comprises a substituted or unsubstituted, alkyl, heteroalkyl, aryl, or heteroaryl group, wherein the alkyl or heteroalkyl group may be saturated or unsaturated. In certain non-limiting embodiments, the alkyl or heteroalkyl group may have between 1 and 10 carbon atoms and the aryl group may have between 5 and 24 carbon atoms. In certain aspects of the invention each R' group comprises a straight or branched chain, unsubstituted alkyl group having between 1 and 10 carbon atoms.

Non-limiting examples of tin-maleate-based catalysts of the present invention include, but are not limited to, dimethyltin diisooctylmaleate, diethyltin diisooctylmaleate, dipropyltin diisooctylmaleate, dibutyltin diisooctylmaleate, dihexyltin diisooctylmaleate, or dioctyltin diisooctylmaleate.

As used herein, the terms "tin-oxide based catalyst" and "tin-oxide based metal catalyst" refers to salts, complexes or compositions of the metal tin with at least one oxide moiety. In certain aspects, it refers to a tin salt of at least one compound of the formula (O)Sn - Rₙ, wherein n = 2. R may include a substituted or unsubstituted alkyl, heteroalkyl, aryl, or heteroaryl group, including, by not limited to substituted or unsubstituted alkanes, substituted or unsubstituted alkenes, substituted or unsubstituted alkynes or combinations thereof, where in certain embodiments, where applicable, such moieties may contain between 1-20 carbon atoms. In further embodiments, the alkyl or heteroalkyl group has between 1 and 10 carbon atoms and the aryl group has between 5 and 24 carbon atoms, and may be optionally substituted at one or more positions, such as, but not limited to, dimethyltin oxide, diethyltin oxide, dipropyl oxide, di(isopropyl) oxide, dibutyl tin oxide, dihexyltin oxide. A non-limiting example of a organic tin-oxide based catalyst of the present invention includes, but is not limited to, Fomrez SUL 11c from Momentive.

As used herein, the terms "zirconate-based catalyst," "zirconate-based metal catalyst," or "organic zirconate-based catalyst" refer to salts, complexes or compositions of the metal zirconium with any organic group. In certain aspects, it may be represented by the formula Zr - (R)ₓ, wherein x is 2, 3, or 4 and each R may be independently selected from the group consisting of a hydrogen, a substituted or unsubstituted alkyl, heteroalkyl, aryl, or heteroaryl group, including, by not limited to substituted or unsubstituted alkanes, substituted or unsubstituted alkenes, substituted or unsubstituted alkynes, ketones, aldehydes, esters, ethers, alcohols, alcoholates, phenolates, glycolates, thiolates, carbonates, carboxylates, octoates, amides, amines, imides, imines, sulfides, sulfoxides, phosphates, or combinations thereof, where in certain embodiments, where applicable, such moieties may contain between 1-20 carbon atoms, or between 1-10 carbon atoms, and may be optionally substituted at one or more positions. In certain preferred embodiments, Zr - (R)ₓ may form one or a derivative of zirconium tetraalkoxides, zirconium octoate (such as zirconium tetraoctoate), a zirconium carboxylate, zirconium acetylacetonate, tetrabutyl zirconate, tetraisobutyl zirconate, zirconium ethoxide, zircunum propoxide, zirconium butoxide, zirconium isopropoxide, zirconium tert butoxide, bis((2-oxoyl-3-(dibenzo-1H-pyrrole-1-yl)-5-(methyl)phenyl)-2-phenoxymethyl)cyclo hexane-1,2-diyl zirconium (IV) dibenzyl, 1,2-bis-(3,5-di-t-butylphenylene)(1-(N-(1-methylethyl)immino)methyl)(2-oxoyl) zirconium dibenzyl, 1,2-bis-(3,5-di-t-butylphenylene)(1-(N-(2-methylcyclohexyl)-immino)methyl)(2-oxo yl) zirconium dibenzyl, bis(dimethyldisiloxane)(indene-1-yl)zirconium dichloride. In certain embodiments the organic zirconates include zirconium tetraalkoxides (such as, but not limited to, Zr(OCH₃)₄, Zr(OC₂H₅)₄, Zr(OC₃H₇)₄, Zr(OC₄H₉)₄, Zr(OC₆H13)₄), and/or their ethylenediamine derivatives such as, but not limited to, Zr[OCH₂-NCH₂CH₂NCH₂O]₂, Zr[O C₂H₄-NCH₂CH₂NC₂ H₄O]₂, Zr[O C₃H₆-NCH₂CH₂N C₃H₆O]₂, Zr[O C₄H₈-NCH₂CH₂N C₄H₈O]₂, Zr[O C₆H₁₂-NCH₂CH₂N C₆H₁₂O]₂. Further non-limiting examples of organic zirconate-based catalysts of the present invention include, but are not limited to, those identified by the tradenames Troymax Zirconium 24 by Troy Chemical, Corp., Unilink 1030, Tyzor 217 from Dorf Ketal, or Bicat 4130M from Shepard.

In certain preferred, but non-limiting, embodiments, the metal catalyst for use as the precipitation resistant metal catalyst of the present invention include tin-mercaptide-based catalysts; tin-maleate-based catalysts, or a combination of these.

Precipitation-resistant metal-based catalysts of the present invention are preferably present in the polyol premix composition in an amount of from about 0.001 wt.% to about 5.0 wt.%, 0.01 wt.% to about 4.0 wt.%, more preferably from about 0.1 wt.% to about 3.5 wt.%, and even more preferably from about 0.2 wt.% to about 3.5 wt. %, by weight of the polyol premix composition. While these are preferred amounts for certain preferred embodiments, those skilled in the art will appreciate that in view of the teachings contained herein the foregoing preferred amounts of the recipitation-resistant metal-based catalyst can be vary widely to suit particular needs and applications, and the appropriate amount can be readily determined by those skilled in the art in view of the teachings contained herein. Such amounts may be the amounts provided by each individual catalyst provided to the mixture, but in certain preferred aspects total weight of the precipitation-resistant metal-based catalysts of the present invention are within these ranges.

Applicants have found that surprising and highly beneficial results can be achieved in certain embodiments, particularly embodiments having a high water content, by the selection of a catalyst system including one or a combination of the metal catalysts of the present invention. In highly preferred embodiments of the present invention, the catalyst system comprises the metal catalyst, according to the broad and preferred aspects of the present invention.

Furthermore, applicants have found that blowing agents and foamable systems that are highly desirable in certain embodiments can be obtained by utilizing one or more of the preferred amine catalysts of the present invention in combination with at least one metal catalyst according to the invention as described above.

The preparation of polyurethane or polyisocyanurate foams using the compositions described herein may follow any of the methods well known in the art can be employed, see Saunders and Frisch, Volumes I and II Polyurethanes Chemistry and technology, 1962, John Wiley and Sons, New York, N.Y. or Gum, Reese, Ulrich, Reaction Polymers, 1992, Oxford University Press, New York, N.Y. or Klempner and Sendijarevic, Polymeric Foams and Foam Technology, 2004, Hanser Gardner Publications, Cincinnati, OH. In general, polyurethane or polyisocyanurate foams are prepared by combining an isocyanate, the polyol premix composition, and other materials such as optional flame retardants, colorants, or other additives. These foams can be rigid, flexible, or semi-rigid, and can have a closed cell structure, an open cell structure or a mixture of open and closed cells.

It is convenient in many applications to provide the components for polyurethane or polyisocyanurate foams in pre-blended formulations. Most typically, the foam formulation is pre-blended into two components. The isocyanate and optionally other isocyanate compatible raw materials, including but not limited to blowing agents and certain silicone surfactants, comprise the first component, commonly referred to as the "A" component. The polyol mixture composition, including surfactant, catalysts, blowing agents, and optional other ingredients comprise the second component, commonly referred to as the "B" component. In any given application, the "B" component may not contain all the above listed components, for example some formulations omit the flame retardant if flame retardancy is not a required foam property. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, water, and even other polyols can be added as a stream to the mix head or reaction site. Most conveniently, however, they are all incorporated into one B component as described above.

A foamable composition suitable for forming a polyurethane or polyisocyanurate foam may be formed by reacting an organic polyisocyanate and the polyol premix composition described above. Any organic polyisocyanate can be employed in polyurethane or polyisocyanurate foam synthesis inclusive of aliphatic and aromatic polyisocyanates. Suitable organic polyisocyanates include aliphatic, cycloaliphatic, aromatic, and heterocyclic isocyanates which are well known in the field of polyurethane chemistry. These are described in, for example, U.S. patents 4,868,224; 3,401,190; 3,454,606; 3,277,138; 3,492,330; 3,001,973; 3,394,164; 3,124.605; and 3,201,372. Preferred as a class are the aromatic polyisocyanates.

Representative organic polyisocyanates correspond to the formula:

R(NCO)z

wherein R is a polyvalent organic radical which is either aliphatic, aralkyl, aromatic or mixtures thereof, and z is an integer which corresponds to the valence of R and is at least two. Representative of the organic polyisocyanates contemplated herein includes, for example, the aromatic diisocyanates such as 2,4-toluene diisocyanate, 2,6-toluene diisocyanate, mixtures of 2,4- and 2,6-toluene diisocyanate, crude toluene diisocyanate, methylene diphenyl diisocyanate, crude methylene diphenyl diisocyanate and the like; the aromatic triisocyanates such as 4,4',4"-triphenylmethane triisocyanate, 2,4,6-toluene triisocyanates; the aromatic tetraisocyanates such as 4,4'-dimethyldiphenylmethane-2,2'5,5'-tetraisocyanate, and the like; arylalkyl polyisocyanates such as xylylene diisocyanate; aliphatic polyisocyanate such as hexamethylene-1,6-diisocyanate, lysine diisocyanate methylester and the like; and mixtures thereof. Other organic polyisocyanates include polymethylene polyphenylisocyanate, hydrogenated methylene diphenylisocyanate, m-phenylene diisocyanate, naphthylene-1,5-diisocyanate, 1-methoxyphenylene-2,4-diisocyanate, 4,4'-biphenylene diisocyanate, 3,3'-dimethoxy-4,4'-biphenyl diisocyanate, 3,3'-dimethyl-4,4'-biphenyl diisocyanate, and 3,3'-dimethyldiphenylmethane-4,4'-diisocyanate; Typical aliphatic polyisocyanates are alkylene diisocyanates such as trimethylene diisocyanate, tetramethylene diisocyanate, and hexamethylene diisocyanate, isophorene diisocyanate, 4, 4'-methylenebis(cyclohexyl isocyanate), and the like; typical aromatic polyisocyanates include m-, and p-phenylene disocyanate, polymethylene polyphenyl isocyanate, 2,4- and 2,6-toluenediisocyanate, dianisidine diisocyanate, bitoylene isocyanate, naphthylene 1,4-diisocyanate, bis(4-isocyanatophenyl)methene, bis(2-methyl-4-isocyanatophenyl)methane, and the like. Preferred polyisocyanates are the polymethylene polyphenyl isocyanates, Particularly the mixtures containing from about 30 to about 85 percent by weight of methylenebis(phenyl isocyanate) with the remainder of the mixture comprising the polymethylene polyphenyl polyisocyanates of functionality higher than 2. These polyisocyanates are prepared by conventional methods known in the art. In the present invention, the polyisocyanate and the polyol are employed in amounts which will yield an NCO/OH stoichiometric ratio in a range of from about 0.9 to about 5.0. In the present invention, the NCO/OH equivalent ratio is, preferably, about 1.0 or more and about 3.0 or less, with the ideal range being from about 1.1 to about 2.5. Especially suitable organic polyisocyanate include polymethylene polyphenyl isocyanate, methylenebis(phenyl isocyanate), toluene diisocyanates, or combinations thereof.

In the preparation of polyisocyanurate foams, trimerization catalysts are used for the purpose of converting the blends in conjunction with excess A component to polyisocyanurate-polyurethane foams. The trimerization catalysts employed can be any catalyst known to one skilled in the art, including, but not limited to, glycine salts, tertiary amine trimerization catalysts, quaternary ammonium carboxylates, and alkali metal carboxylic acid salts and mixtures of the various types of catalysts. Preferred species within the classes are sodium acetate, potassium octoate, and sodium N-(2-hydroxy-5-nonylphenol)methyl-N-methylglycinate; (2-hydroxypropyl)trimethylammonium 2-ethylhexanoate (TMR^{®} sold by Air Products and Chemicals); (2-hydroxypropyl)trimethylammonium formate (TMR-2^{®} sold by Air Products and Chemicals); and Toyocat TRX sold by Tosoh, Corp.

Conventional flame retardants can also be incorporated, preferably in amount of not more than about 20 percent by weight of the reactants. Optional flame retardants include tris(2-chloroethyl)phosphate, tris(2-chloropropyl)phosphate, tris(2,3-dibromopropyl)phosphate, tris(1,3-dichloropropyl)phosphate, tri(2-chloroisopropyl)phosphate, tricresyl phosphate, tri(2,2-dichloroisopropyl)phosphate, diethyl N,N-bis(2-hydroxyethyl) aminomethylphosphonate, dimethyl methylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, N-Methylol dimethylphosphonopropionamide, aminophenyl phosphate, mixed esters with diethylene glycol and propylene glycol of 3,4,5,6-tetrabromo-1,2-benzenedicarboxylic acid, various halogenated aromatic compounds, antimony oxide, aluminum trihydrate, polyvinyl chloride, melamine, and the like. Other optional ingredients can include from 0 to about 7 percent water, which chemically reacts with the isocyanate to produce carbon dioxide. This carbon dioxide acts as an auxiliary blowing agent. Formic acid is also used to produce carbon dioxide by reacting with the isocyanate and is optionally added to the "B"component.

In addition to the previously described ingredients, other ingredients such as, dyes, fillers, pigments and the like can be included in the preparation of the foams. Dispersing agents and cell stabilizers can be incorporated into the present blends. Conventional fillers for use herein include, for example, aluminum silicate, calcium silicate, magnesium silicate, calcium carbonate, barium sulfate, calcium sulfate, glass fibers, carbon black and silica. The filler, if used, is normally present in an amount by weight ranging from about 5 parts to 100 parts per 100 parts of polyol. A pigment which can be used herein can be any conventional pigment such as titanium dioxide, zinc oxide, iron oxide, antimony oxide, chrome green, chrome yellow, iron blue siennas, molybdate oranges and organic pigments such as para reds, benzidine yellow, toluidine red, toners and phthalocyanines.

The polyurethane or polyisocyanurate foams produced can vary in density from about 0.5 pounds per cubic foot to about 60 pounds per cubic foot, preferably from about 1.0 to 20.0 pounds per cubic foot, and most preferably from about 1.5 to 6.0 pounds per cubic foot. The density obtained is a function of how much of the blowing agent or blowing agent mixture disclosed in this invention plus the amount of auxiliary blowing agent, such as water or other co-blowing agents is present in the A and / or B components, or alternatively added at the time the foam is prepared. These foams can be rigid, flexible, or semi-rigid foams, and can have a closed cell structure, an open cell structure or a mixture of open and closed cells. These foams are used in a variety of well known applications, including but not limited to thermal insulation, cushioning, flotation, packaging, adhesives, void filling, crafts and decorative, and shock absorption.

### EXAMPLES

The following non-limiting examples serve to illustrate the invention.

### Example 1

All polyol blends were prepared according the formulation in Table 1, below. Initial reactivity was recorded by reacting the polyol blend (50°F) with equal weight of isocyanate Lupranate M20 (70°F), resulting in an index of 107. To accelerate the aging and hydrolyzation reaction of the tin catalysts, the polyol blends were were loaded into a Fisher Porter tube and heated in an oven at 54°C (130°F) for one week. When these heat-aged polyol blends were used to produce polyurethane foam, the reactivity may change, depending on the hydrolytic stability of the selected tin catalyst. Reactivity of the aged samples was recorded similarly to the initial reactivity.

**Table 1. Formulation**

| | |
|---|---|
| TERATE^{®} 4020 | 60 |
| VORANOL^{®} 470X | 30 |
| VORANOL^{®} 360 | 10 |
| TCPP | 10 |
| PHT-4-Diol | 3 |
| Water | 2.5 |
| DABCO^{®} DC-193 | 1.5 |
| 1233zd (E) | 12 |
| Metal catalyst | 3 |
| A: LUPRANATE^{®} M20, | |
| A: B = 1:1 (w/w), Index: 107 | |

Seven tin compounds were studied including dibutyltin dilaurylmercaptide (DABCO^{®} T120, FOMREZ^{®} UL-1), dibutyltin diisooctylmaleate (DABCO^{®} T125), dimethyltin dilaurylmercaptide (FOMREZ^{®} UL-22), dioctyltin dilaurylmercaptide FOMREZ^{®} UL-32), dibutyltin di-(2-ethylhexylthioglycolate) (FOMREZ^{®} UL-6), and dibutyltin oxide (FOMREZ^{®} SUL 11C). Also tested were one cobalt-based catalyst (Troymax Cobalt 12), four zinc-based catalysts (Troymax Zinc 16, Bicat Z, K-Kat xk 617, K-Kat xk 618), one manganese-based catalyst (Troymax Manganese 12), three titanium-based catalysts (Unilink 2200, Unilink 2300, Tyzor TE), and three zirconium based catalysts (Unilink 1030, Tyzor 217 and Bicat 4130M).

As illustrated Figure 1, mercaptide-containing and maleate-containing tin compounds showed good hydrolytic stability, thus can be used as a catalyst in a polymer resin premix to achieve required shelf life. Dibutyltin oxide (FOMREZ^{®} SUL 11C) also showed good hydrolytic stability. On the other hand, the thioglycolate-containing compound showed a poor hydrolytic stability, and cannot be used as the catalyst in a polymer premix which requires reasonable shelf life.

Such data indicates that the ligand size of the tin compounds impacted catalytic activity. Among UL-32, UL-1 and UL 22, the only difference is the size of alkyl group. Methyl group in UL-22 is smaller than butyl group in UL-1 which is in turn smaller than the octyl group in UL-32. The gel time showed in the order of UL-32 >UL-1>UL-22 (slow to fast). It is also true when DABCO^{®} T120 and T125 were compared. DABCO^{®} T120 and FOMREZ^{®} UL-1 have the same effective tin component. They did show some slightly different catalytic activity. Besides experimental error, other components in these two compounds may also play a role. Among the studied tin catalysts, DABCO^{®} T125 showed slowest catalytic activity.

There was no visual solid precipitation for all heat-aged resins. The reactivity of these aged resins with isocyanate was checked again. The results showed that, of the seven resins studied, only the resin containing FOMREZ^{®} UL-6 had a significant gel time change. All other six aged resins did not show significant reactivity change. This indicates that FOMREZ^{®} UL-6 has been hydrolyzed due to the fact this compound contains easily hydrolyzable thioglycolate groups and lost the catalytic activity during heat-aging process. As a result, the polymerization reaction between isocyanate and the aged resin became much slower, compared with the freshly prepared resin.

The other six tin compounds, dibutyltin dilaurylmercaptide (DABCO^{®} T120, FOMREZ^{®} UL-1), dibutyltin diisooctylmaleate (DABCO^{®} T125), dimethyltin dilaurylmercaptide (FOMREZ^{®} UL-22), dioctyltin dilaurylmercaptide FOMREZ^{®} UL-32), Dibutyltin oxide (FOMREZ^{®} SUL 11C), contain mercaptide groups, maleate group, or tin oxide group. All these functional groups can complex with tin metal to avoid the attack from water, thus displayed very strong hydrolytic stability, and did not show significant reactivity change. Based on these experiment data, other mercaptide-containing tin catalysts such as Baerostab OM 700 and Baerostab OM 104 (both have similar structure with FOMREZ^{®} UL-32), should also have good hydrolytic stability.

Troymax Cobalt 12 had similar catalytic reactivity with those tin catalysts, and showed good hydrolytic stability in the current study.

Zinc catalysts such as Troymax Zinc 16, Bicat Z K-Kat xk 617/618 were weaker catalysts, compared with tin catalysts. However, these catalysts showed good hydrolytic stability.

Troymax Manganese 12 had similar catalytic reactivity with zinc catalysts. Its catalytic reactivity was increased instead of general decrease, after aging.

Titanium catalysts, such as Unilink 2200/2300, are very weak catalysts. They did show excellent hydrolytic stability. However, Tyzor TE which is a triethanolamine titanium complex, lost its catalytic reactivity significantly.

Zirconium catalysts were less active compared with tin catalysts. However, they were stable catalysts. Unilink 1030, Tyzor 217 and Bicat 4130M all retained their catalytic activity very well after aged test. Among them, Bicat 4130M precipitated very slightly after aged test.

### Example 2

The following experiment illustrates the use of combination metal catalyst and amine catalysts. In formulation A, the stable amine catalysts Toyocat DM 70 and Jeffcat DMDEE were used along with low dose stable tin catalyst Dabco T120 (Table 2). When such a polyol preblend (50°F) reacted with equal amount of isocyanate Lupranate M20 (70°F), the gel time was 13 seconds. In formulation B, those stable amine catalysts were used along with high dose of stable tin catalyst Dabco T120 and Dabco K15 (potassium 2-ethylhexanoate). This formulation also contains higher dose of water than formulation A. The initial gel time was 18 seconds based on same methods for formulation A.

**Table 2**

| Component | A | B |
|---|---|---|
| Terate 4020 | 45 | 60 |
| Voranol 470X | 40 | 30 |
| Voranol 360 | 15 | 10 |
| DC 193 | 1.5 | 1.5 |
| TCPP | 10 | 10 |
| PHT-4-Diol | | 3 |
| Water | 2 | 2.5 |
| Toyocat DM 70 | 4.5 | 0.5 |
| Jeffcat DMDEE | 1 | 3 |
| Dabco K15 | | 1.5 |
| Dabco T120 | 0.2 | 1 |
| 1233zd (E) | 10 | 12 |
| Gel time (initial) | 13 sec | 18 sec |
| Gel time (6 month. Room temperature) | 15 sec | 17 sec |

These two polyol preblends were aged for 6 months at room temperature. The reactivity was measured again with the same method as the initial reactivity. The aged gel time was 15 seconds for formulation A, and 17 seconds for formulation B, respectively. The gel time change (increased 2 second in formulation A and decreased 1 second for formulation B) was well within experiment error. Such a catalyst package which comprised of stable amine catalysts and stable metal catalysts in both formulations produced a shelf life of six month for both formulations.

### Example 3

Table 3 is another example using amine/metal catalyst to achieve a desired shelf life. Formulation C used one amine catalyst and one zinc catalyst, while Formulation D used two amine catalysts and one zinc catalyst. The reactivity study which used same method as above (reacting the polyol blend at 50°F with equal amount of isocyanate Lupranate M20 at 70°F), showed that the gel time decreased in formulation C (which means the reactivity increased) and remained practically the same for Formulation D, after the polyol blends were aged at 130°F for one week.

**Table 3**

| Component | C | D |
|---|---|---|
| Polyol 1 | 50 | |
| Polyol 2 | 50 | |
| Niax L6900 | 2 | |
| TCPP | 15 | |
| Water | 1.5 | |
| Polycat 8 | 1.5 | 2 |
| Polycat 12 | | 0.5 |
| Bicat Z | 0.5 | 0.5 |
| 1233zd (E) | 26 | |
| Gel time (initial) | 65 sec | 50 sec |
| Gel time (130F, one week) | 60 sec | 51 see |

### Example 4

Example 2 is repeated using each of the other metal catalysts disclosed in Example 1, namely dibutyltin dilaurylmercaptide (FOMREZ^{®} UL-1), dibutyltin diisooctylmaleate (DABCO^{®} T125), dimethyltin dilaurylmercaptide (FOMREZ^{®} UL-22), dioctyltin dilaurylmercaptide FOMREZ^{®} UL-32), dibutyltin oxide (FOMREZ^{®} SUL 11C); Troymax Cobalt 12; Troymax Zinc 16, Bicat Z; K-Kat xk 617; K-Kat xk 618; Troymax Manganese 12; Unilink 2200; Unilink 2300, Tyzor TE; Unilink 1030, Tyzor 217 and Bicat 4130M. The following formulation is used for each catalyst:

**Table 4**

| Component | E | F |
|---|---|---|
| Terate 4020 | 45 | 60 |
| Voranol 470X | 40 | 30 |
| Voranol 360 | 15 | 10 |
| DC 193 | 1.5 | 1.5 |
| TCPP | 10 | 10 |
| PHT-4-Diol | | 3 |
| Water | 2 | 2.5 |
| Toyocat DM 70 | 4.5 | 0.5 |
| Jeffcat DMDEE | 1 | 3 |
| Dabco K15 | | 1.5 |
| Metal Catalyst | 0.2 | 1 |
| 1233zd (E) | 10 | 12 |

In formulation E, the stable amine catalysts Toyocat DM 70 and Jeffcat DMDEE are used along with low dose stable tin catalyst Dabco T120 (Table 4). When such a polyol preblend (50°F) reacts with equal amount of isocyanate Lupranate M20 (70°F), the gel time is within commercially tolerable levels for all catalysts. In formulation F, those stable amine catalysts are used along with high dose of stable tin catalyst Dabco T120 and Dabco K15 (potassium 2-ethylhexanoate ). This formulation also contains higher dose of water than formulation E. Again, the gel times for all catalysts are all in commercially tolerable levels.

These polyol preblends are also aged for 6 months at room temperature. The reactivity is measured again with the same method as the initial reactivity. Again, the gel times post-aging are all within commercially tolerable limits.

The present invention can be further understood by reference to the following clauses:

What is claimed is:
1. A foamable composition comprising:
   a. a blowing agent comprising a tetrafluoropropene, a chlorotrifluoropropene, and/or a hexafluorobutene;
   b. one or more polyols,
   c. one or more surfactants,
   d. water, and
   e. at least one precipitant resistant metal catalyst selected from the group consisting of a precipitant resistant cobalt-based metal catalyst, a precipitant resistant zinc-based metal catalyst, a precipitant resistant tin-based metal catalyst, a precipitant resistant zirconate-based metal catalyst, a precipitant resistant manganese-based metal catalyst, a precipitant resistant titanium-based metal catalyst and combinations thereof.
2. The foamable composition of clause 1 wherein said precipitant resistant metal catalyst comprises a precipitant resistant cobalt-based metal catalyst that is represented by the formula Co - (R)₂, where each R is independently selected from the group consisting of a hydrogen, a halide, a hydroxide, a sulfate, a carbonate, a cyanate, a thiocyanate, an isocyanate, an isothiocyanate, a carboxylate, an oxalate, a nitrate, a C₁-C₁₀ alkane, a C₁-C₁₀ alkene, a C₁-C₁₀ alkyne, a C₁-C₁₀ heteroalkane, an aryl group, a heteroaryl group, a ketone, an aldehyde, an ester, an ether, an alcohol, an alcoholate, a phenolate, a glycolate, a thiolate, an octoate, a hexanoate, an amide, an amine, an imide, an imine, a sulfide, a sulfoxide, a phosphate, a derivative thereof or combinations, where any of the foregoing R groups may be independently substituted or unsubstituted.
3. The foamable composition of clause 2 wherein said precipitant resistant cobalt-based metal catalyst is selected from the group consisting of cobalt octoate, cobalt hexanoate, cobalt ethylhexanoate, cobalt acetylacetonate, cobalt ethoxide, cobalt propoxide, cobalt butoxide, cobalt isopropoxide, cobalt butoxide, derivatives thereof, and combinations thereof.
4. The foamable composition of clause 1 wherein said precipitant resistant metal catalyst comprises a precipitant resistant zinc-based metal catalyst that is represented by the formula Zn - (R)₂, where each R is independently selected from the group consisting of a hydrogen, a halide, a hydroxide, a sulfate, a carbonate, a cyanate, a thiocyanate, an isocyanate, a isothiocyanate, a carboxylate, an oxalate, a nitrate, a C₁-C₁₀ alkane, C₁-C₁₀ alkene, a C₁-C₁₀ alkyne, a heteroalkyl group, an aryl group, a heteroaryl group, a ketone, an aldehyde, an ester, an ether, an alcohol, an alcoholate, a phenolate, a glycolate, a thiolate, an octoate, a hexanoate, an amide, an amine, an imide, an imine, a sulfide, a sulfoxide, a phosphate, a derivative thereof or combinations, where any of the foregoing R groups may be independently substituted or unsubstituted.
5. The foamable composition of clause 4 wherein said precipitant resistant zinc-based metal catalyst is selected from the group consisting of zinc carboxylate, zinc octoate, zinc hexanoate, zinc ethylhexanoate, a zinc acetylacetonate,zinc ethoxide, zinc propoxide, zinc butoxide, zinc isopropoxide, derivatives thereof, and combinations thereof.
6. The foamable composition of clause 1 wherein said precipitant resistant metal catalyst comprises a precipitant resistant manganese-based metal catalyst that is represented by the formula Mn - (R)ₓ, wherein x is 1, 2, 3, or 4 and each R is independently selected from the group consisting of a hydrogen, a halide, a hydroxide, a sulfate, a carbonate, a cyanate, a thiocyanate, an isocyanate, a isothiocyanate, a carboxylate, an oxalate, a nitrate, a C₁-C₁₀alkane, C₁-C₁₀ alkene, a C₁-C₁₀ alkyne, a heteroalkyl group, an aryl group, a heteroaryl group,a ketone, an aldehyde, an ester, an ether, an alcohol, an alcoholate, a phenolate, a glycolate, a thiolate, an octoate, a hexanoate, an ethylhexanoate, an amide, an amine, an imide, an imine, a sulfide, a sulfoxide, a phosphate, a derivative thereof or combinations, where any of the foregoing R groups may be independently substituted or unsubstituted.
7. The foamable composition of clause 6 wherein said precipitant resistant manganese -based metal catalyst is selected from the group consisting of a manganese carboxylate, a manganese octoate, manganese hexanoate, manganese 2-ethylhexanoate, a manganese acetylacetonate,manganese ethoxide, manganese propoxide, manganese butoxide, manganese isopropoxide, manganese butoxide, derivatives thereof, and combinations thereof.
8. The foamable composition of clause 1 wherein said precipitant resistant metal catalyst comprises a precipitant resistant titanium oxide based metal catalyst that is represented by the formula Ti - (OR)ₓ, wherein x is 2, 3, or 4, and R is selected from the group consisting of a hydrogen, a halide, a hydroxide, a sulfate, a carbonate, a cyanate, a thiocyanate, an isocyanate, a isothiocyanate, a carboxylate, an oxalate, a nitrate, a C₁-C₁₀ alkane, C₁-C₁₀ alkene, a C₁-C₁₀ alkyne, a heteroalkyl group, an aryl group, a heteroaryl group,a ketone, an aldehyde, an ester, an ether, an alcohol, an alcoholate, a phenolate, a glycolate, a thiolate, an octoate, a hexanoate, an ethylhexanoate, an amide, an amine, an imide, an imine, a sulfide, a sulfoxide, a phosphate, a derivative thereof or combinations, where any of the foregoing R groups may be independently substituted or unsubstituted.
9. The foamable composition of clause 8 wherein said precipitant resistant titanium oxide based metal catalyst comprises a precipitant resistant titanium tetraalkoxide selected from the group consisting of Ti(OCH₃)₄, Ti(OC₂H₅)₄, Ti(OC₃H₇)₄, Ti(OC₄H₉)₄, Ti(OC₆H₁₃)₄, and combinations thereof.
10. The foamable composition of clause 1 wherein said precipitant resistant metal catalyst comprises a precipitant resistant tin mercaptide-based catalyst and/or a tin-maleate-based catalyst, wherein the tin mercaptide-based catalyst is represented by the formula (R-S)ₙ- Sn - Rₘ, wherein n = 1, 2, 3, or 4; m = 0, 1, 2, or 3 and n + m = 4, and wherein each Rindependently comprises a saturated or unsaturated alkyl group, a saturated or unsaturated heteroalkyl group, an aryl group, a heteroaryl group, and combinations thereof, where any of the foregoing R groups may be independently substituted or unsubstituted, and wherein said tin maleate-based catalyst that is represented by the formula (RO₂CCHCHCO₂)ₙ- Sn - R'ₘ, wherein n = 1, 2, 3, or 4; m = 0, 1, 2, or 3 and n + m = 4, wherein each R and R'independently comprises an alkyl group, a heteroalkyl group, an aryl group, a heteroaryl group, and combinations thereof, wherein the alkyl or heteroalkyl group may be saturated or unsaturated and where any of the foregoing R groups may be independently substituted or unsubstituted.
11. The foamable composition of clause 10 wherein said precipitant resistant tin mercaptide-based catalyst is selected from the group consisting of dibutyltin dilaurylmercaptide, dimethyltin dilaurylmercaptide, diethyltin dilaurylmercaptide, dipropyltin dilaurylmercaptide, dihexyltin dilaurylmercaptide, dioctyltin dilaurylmercaptide, and combinations thereof and/or said precipitant resistant tin maleate-based catalyst is selected from the group consisting of dimethyltin diisooctylmaleate, diethyltin diisooctylmaleate, dipropyltin diisooctylmaleatedibutyltin diisooctylmaleate, dihexyltin diisooctylmaleate, dioctyltin diisooctylmaleate, and combinations thereof.
12. The foamable composition of clause 1 wherein said precipitant resistant metal catalyst comprises a precipitant resistant tin oxide-based catalyst that is represented by the formula (O)Sn - R₂, wherein each R independently comprises an alkyl group, a heteroalkyl group, an aryl group, a heteroaryl group, and combinations thereof, wherein the alkyl or heteroalkyl group may be saturated or unsaturated and where any of the foregoing R groups may be independently substituted or unsubstituted.
13. The foamable composition of clause 12 wherein said precipitant resistant tin oxide-based catalyst is selected from the group consisting of dimethyltin oxide, diethyltin oxide, dipropyltin oxide, di(isopropyltin) oxide, dibutyl tin oxide, dihexyltin oxide.
14. The foamable composition of clause 1 wherein said precipitant resistant metal catalyst comprises a precipitant resistant organic zirconate-based catalyst that is represented by the formula Zr - (R)ₓ, wherein x is 2, 3, or 4 and each R is independently selected from the group consisting of a hydrogen, a C₁-C₁₀ alkane, C₁-C₁₀ alkene, a C₁-C₁₀ alkyne, a heteroalkyl group, a aryl group, a heteroaryl group, a ketone, an aldehyde, an ester, an ether, an alcohol, an alcoholate, a phenolate, a glycolate, a thiolate, a carbonate, a carboxylate, an octoate, an amide, an amine, an imide, an imine, a sulfide, a sulfoxide, a phosphate, a derivative thereof or combinations, where any of the foregoing R groups may be independently substituted or unsubstituted.
15. The foamable composition of clause 14, wherein the precipitant resistant zirconate-based catalyst is selected from the group consisting of Zr(OCH₃)₄, Zr(OC₂H₅)₄, Zr(OC₃H₇)₄, Zr(OC₄H₉)₄, Zr(OC₆H13)₄), Zr[OCH₂-NCH₂CH₂NCH₂O]₂, Zr[O C₂H₄-NCH₂CH₂NC₂ H₄O]₂, Zr[O C₃H₆-NCH₂CH₂N C₃H₆O]₂, Zr[O C₄H₈-NCH₂CH₂N C₄H₈O]₂, and Zr[O C₆H₁₂-NCH₂CH₂N C₆H₁₂O]₂.
16. The foamable composition of clause 1 wherein said blowing agent is selected from the group consisting of 1,3,3,3-tetrafluoropropene (1234ze); 1-chloro-3,3,3-trifluoropropene (1233zd); 1,1,1,4,4,4-hexafluorobut-2-ene (1336mzzm); and combinations thereof.

## Claims

1. A foamable composition comprising:
a. a blowing agent comprising a tetrafluoropropene, a chlorotrifluoropropene, and/or a hexafluorobutene;
b. one or more polyols,
c. one or more surfactants,
d. water, and
e. at least one precipitant resistant metal catalyst selected from the group consisting of a precipitant resistant cobalt-based metal catalyst, a precipitant resistant zinc-based metal catalyst, a precipitant resistant tin-based metal catalyst, a precipitant resistant zirconate-based metal catalyst, a precipitant resistant manganese-based metal catalyst, a precipitant resistant titanium-based metal catalyst and combinations thereof.

2. The foamable composition of claim 1 wherein said precipitant resistant metal catalyst comprises a precipitant resistant cobalt-based metal catalyst that is represented by the formula Co - (R)₂, where each R is independently selected from the group consisting of a hydrogen, a halide, a hydroxide, a sulfate, a carbonate, a cyanate, a thiocyanate, an isocyanate, an isothiocyanate, a carboxylate, an oxalate, a nitrate, a C₁-C₁₀ alkane, a C₁-C₁₀ alkene, a C₁-C₁₀ alkyne, a C₁-C₁₀ heteroalkane, an aryl group, a heteroaryl group, a ketone, an aldehyde, an ester, an ether, an alcohol, an alcoholate, a phenolate, a glycolate, a thiolate, an octoate, a hexanoate, an amide, an amine, an imide, an imine, a sulfide, a sulfoxide, a phosphate, a derivative thereof or combinations, where any of the foregoing R groups may be independently substituted or unsubstituted.

3. The foamable composition of claim 2 wherein said precipitant resistant cobalt-based metal catalyst is selected from the group consisting of cobalt octoate, cobalt hexanoate, cobalt ethylhexanoate, cobalt acetylacetonate, cobalt ethoxide, cobalt propoxide, cobalt butoxide, cobalt isopropoxide, cobalt butoxide, derivatives thereof, and combinations thereof.

4. The foamable composition of claim 1 wherein said precipitant resistant metal catalyst comprises a precipitant resistant zinc-based metal catalyst that is represented by the formula Zn - (R)₂, where each R is independently selected from the group consisting of a hydrogen, a halide, a hydroxide, a sulfate, a carbonate, a cyanate, a thiocyanate, an isocyanate, a isothiocyanate, a carboxylate, an oxalate, a nitrate, a C₁-C₁₀ alkane, C₁-C₁₀ alkene, a C₁-C₁₀ alkyne, a heteroalkyl group, an aryl group, a heteroaryl group, a ketone, an aldehyde, an ester, an ether, an alcohol, an alcoholate, a phenolate, a glycolate, a thiolate, an octoate, a hexanoate, an amide, an amine, an imide, an imine, a sulfide, a sulfoxide, a phosphate, a derivative thereof or combinations, where any of the foregoing R groups may be independently substituted or unsubstituted.

5. The foamable composition of claim 4 wherein said precipitant resistant zinc-based metal catalyst is selected from the group consisting of zinc carboxylate, zinc octoate, zinc hexanoate, zinc ethylhexanoate, a zinc acetylacetonate,zinc ethoxide, zinc propoxide, zinc butoxide, zinc isopropoxide, derivatives thereof, and combinations thereof.

6. The foamable composition of claim 1 wherein said precipitant resistant metal catalyst comprises a precipitant resistant manganese-based metal catalyst that is represented by the formula Mn - (R)ₓ, wherein x is 1, 2, 3, or 4 and each R is independently selected from the group consisting of a hydrogen, a halide, a hydroxide, a sulfate, a carbonate, a cyanate, a thiocyanate, an isocyanate, a isothiocyanate, a carboxylate, an oxalate, a nitrate, a C₁-C₁₀alkane, C₁-C₁₀ alkene, a C₁-C₁₀ alkyne, a heteroalkyl group, an aryl group, a heteroaryl group,a ketone, an aldehyde, an ester, an ether, an alcohol, an alcoholate, a phenolate, a glycolate, a thiolate, an octoate, a hexanoate, an ethylhexanoate, an amide, an amine, an imide, an imine, a sulfide, a sulfoxide, a phosphate, a derivative thereof or combinations, where any of the foregoing R groups may be independently substituted or unsubstituted.

7. The foamable composition of claim 6 wherein said precipitant resistant manganese -based metal catalyst is selected from the group consisting of a manganese carboxylate, a manganese octoate, manganese hexanoate, manganese 2-ethylhexanoate, a manganese acetylacetonate,manganese ethoxide, manganese propoxide, manganese butoxide, manganese isopropoxide, manganese butoxide, derivatives thereof, and combinations thereof.

8. The foamable composition of claim 1 wherein said precipitant resistant metal catalyst comprises a precipitant resistant titanium oxide based metal catalyst that is represented by the formula Ti - (OR)ₓ, wherein x is 2, 3, or 4, and R is selected from the group consisting of a hydrogen, a halide, a hydroxide, a sulfate, a carbonate, a cyanate, a thiocyanate, an isocyanate, a isothiocyanate, a carboxylate, an oxalate, a nitrate, a C₁-C₁₀ alkane, C₁-C₁₀ alkene, a C₁-C₁₀ alkyne, a heteroalkyl group, an aryl group, a heteroaryl group,a ketone, an aldehyde, an ester, an ether, an alcohol, an alcoholate, a phenolate, a glycolate, a thiolate, an octoate, a hexanoate, an ethylhexanoate, an amide, an amine, an imide, an imine, a sulfide, a sulfoxide, a phosphate, a derivative thereof or combinations, where any of the foregoing R groups may be independently substituted or unsubstituted, preferably wherein said precipitant resistant titanium oxide based metal catalyst comprises a precipitant resistant titanium tetraalkoxide selected from the group consisting of Ti(OCH₃)₄, Ti(OC₂H₅)₄, Ti(OC₃H₇)₄, Ti(OC₄H₉)₄, Ti(OC₆H₁₃)₄, and combinations thereof.

9. The foamable composition of claim 1 wherein said precipitant resistant metal catalyst comprises a precipitant resistant tin mercaptide-based catalyst and/or a tin-maleate-based catalyst, wherein the tin mercaptide-based catalyst is represented by the formula (R-S)ₙ- Sn - Rₘ, wherein n = 1, 2, 3, or 4; m = 0, 1, 2, or 3 and n + m = 4, and wherein each Rindependently comprises a saturated or unsaturated alkyl group, a saturated or unsaturated heteroalkyl group, an aryl group, a heteroaryl group, and combinations thereof, where any of the foregoing R groups may be independently substituted or unsubstituted, and wherein said tin maleate-based catalyst that is represented by the formula (RO₂CCHCHCO₂)ₙ- Sn - R'ₘ, wherein n = 1, 2, 3, or 4; m = 0, 1, 2, or 3 and n + m = 4, wherein each R and R'independently comprises an alkyl group, a heteroalkyl group, an aryl group, a heteroaryl group, and combinations thereof, wherein the alkyl or heteroalkyl group may be saturated or unsaturated and where any of the foregoing R groups may be independently substituted or unsubstituted, preferably wherein said precipitant resistant tin mercaptide-based catalyst is selected from the group consisting of dibutyltin dilaurylmercaptide, dimethyltin dilaurylmercaptide, diethyltin dilaurylmercaptide, dipropyltin dilaurylmercaptide, dihexyltin dilaurylmercaptide, dioctyltin dilaurylmercaptide, and combinations thereof and/or said precipitant resistant tin maleate-based catalyst is selected from the group consisting of dimethyltin diisooctylmaleate, diethyltin diisooctylmaleate, dipropyltin diisooctylmaleatedibutyltin diisooctylmaleate, dihexyltin diisooctylmaleate, dioctyltin diisooctylmaleate, and combinations thereof.

10. The foamable composition of claim 1 wherein said precipitant resistant metal catalyst comprises a precipitant resistant tin oxide-based catalyst that is represented by the formula (O)Sn - R₂, wherein each R independently comprises an alkyl group, a heteroalkyl group, an aryl group, a heteroaryl group, and combinations thereof, wherein the alkyl or heteroalkyl group may be saturated or unsaturated and where any of the foregoing R groups may be independently substituted or unsubstituted, preferably wherein said precipitant resistant tin oxide-based catalyst is selected from the group consisting of dimethyltin oxide, diethyltin oxide, dipropyltin oxide, di(isopropyltin) oxide, dibutyl tin oxide, dihexyltin oxide.

11. The foamable composition of claim 1 wherein said precipitant resistant metal catalyst comprises a precipitant resistant organic zirconate-based catalyst that is represented by the formula Zr - (R)ₓ, wherein x is 2, 3, or 4 and each R is independently selected from the group consisting of a hydrogen, a C₁-C₁₀ alkane, C₁-C₁₀ alkene, a C₁-C₁₀ alkyne, a heteroalkyl group, a aryl group, a heteroaryl group, a ketone, an aldehyde, an ester, an ether, an alcohol, an alcoholate, a phenolate, a glycolate, a thiolate, a carbonate, a carboxylate, an octoate, an amide, an amine, an imide, an imine, a sulfide, a sulfoxide, a phosphate, a derivative thereof or combinations, where any of the foregoing R groups may be independently substituted or unsubstituted, preferably wherein the precipitant resistant zirconate-based catalyst is selected from the group consisting of Zr(OCH₃)₄, Zr(OC₂H₅)₄, Zr(OC₃H₇)₄, Zr(OC₄H₉)₄, Zr(OC₆H13)₄), Zr[OCH₂-NCH₂CH₂NCH₂O]₂, Zr[O C₂H₄-NCH₂CH₂NC₂ H₄O]₂, Zr[O C₃H₆-NCH₂CH₂N C₃H₆O]₂, Zr[O C₄H₈-NCH₂CH₂N C₄H₈O]₂, and Zr[O C₆H₁₂-NCH₂CH₂N C₆H₁₂O]₂.

12. The foamable composition of claim 1 wherein said blowing agent is selected from the group consisting of 1,3,3,3-tetrafluoropropene (1234ze); 1-chloro-3,3,3-trifluoropropene (1233zd); 1,1,1,4,4,4-hexafluorobut-2-ene (1336mzzm); and combinations thereof.

13. A method of producing a foam using the foamable composition of any preceding claim.

14. A foam obtained by the method of claim 13.

15. A foam obtainable by the method of claim 13.
